# EUROPEAN PATENT SPECIFICATION

(11) **EP 3 272 962 B1**
(45) Date of publication and mention of the grant of the patent: **09.01.2019**
(21) Application number: 17180183.0
(22) Date of filing: 07.07.2017
(51) Int. Cl.: E04C 2/24, E04C 2/292, E04C 2/296, E04C 2/38, B32B 3/00

(54) **METHOD FOR MANUFACTURING AN ELEMENT AND A CORRESPONDING ELEMENT**
VERFAHREN ZUR HERSTELLUNG EINES ELEMENTS UND ENTSPRECHENDES ELEMENT
PROCÉDÉ DE FABRICATION D'UN ÉLÉMENT ET ÉLÉMENT CORRESPONDANT

(30) Priority: 13.07.2016 FI 20165586
(43) Date of publication of application: 24.01.2018
(73) Proprietor: IntLog Oy, 27500 Kauttua (FI)
(72) Inventor: VILEN, Hannu, 51780 KUOSMALA (FI)
(74) Representative: Helke, Kimmo Kalervo

(56) References cited:
- EP-A2- 1 258 343
- WO-A1-99/27209
- DE-A1- 19 604 433
- FI-B- 94 277
- JP-A- H11 198 865
- US-A- 4 372 799
- US-A- 6 138 435

## Description

The invention relates to a method for manufacturing an element, in which method
- forming two outer-surface panels, i.e. a first outer-surface panel and a second outer-surface panel, to be set facing each other,
- spreading a first adhesive surface on the first outer-surface panel,
- forming a frame structure on top of the first adhesive surface, in order to support the outer-surface panels at a distance from each other, which frame structure conforms essentially to the outline of the outer-surface panels,
- forming a suction arrangement inside the frame structure, in order to suck air from inside the element,
- forming at least one insulation layer inside the frame structure by placing the insulation inside the frame structure on the first adhesive surface, the insulation being a material impervious to air,
- spreading a second adhesive surface between the second outer-surface panel and the insulation layer, and
- creating a vacuum with the aid of the suction arrangement inside the frame structure in order to bring the first outer-surface panel into film contact with the first adhesive surface and the second outer-surface panel into film contact with the second adhesive surface.

The invention also relates to a corresponding element.

Publication FI 105845 B, in which a method is disclosed for manufacturing an element and a corresponding element, is known from the prior art. The element includes outer panels and between them a frame structure and an insulation layer forming insulation. In the method grooves are formed in the outer panel, through which excess adhesive is sucked between the outer panels and the insulation, by which the element's components are locked to each other. In terms of the final structure of the element, it is important that there is sufficient adhesive so that the element's components lock to each other. On the other hand, too great an amount of adhesive weakens locking. For this reason, excess adhesive is sucked out from inside the element along the grooves with the aid of a vacuum through a vacuum connection belonging to the element. The problem in such a method and element is that the forming of the grooves is a laborious and time-consuming stage in the manufacture of the element. In addition, the grooves and suction arrangements can become blocked by adhesive, which will prevent the removal of the excess adhesive. Further, the making of grooving in the surface of the insulation layer reduces the contact surface area between the insulation layer and the outer-surface panel, thus weakening the bond between them.

Publication FI 94277, in which a hollow metal profile forms a suction arrangement inside the element, is also known from the prior art. A vacuum is created inside the element through the profile. However, a drawback with the structure of such an element is the weight of the hollow profile and the space it takes in the direction of the plane of the element.

A method according to the preamble of claim 1 is known from US 6 138 435 A.

The invention is intended to create a more effective and reliable method for manufacturing elements than the methods of the prior art. The characteristic features of this invention are stated in the accompanying Claim 1. The invention is also intended to create an element of more even quality than elements of the prior art. The characteristic features of this invention are stated in the accompanying Claim 9.

This intention can be achieved by means of a method for manufacturing an element, in which method two outer-surface panels, i.e. a first outer-surface panel and a second outer-surface panel, are arranged to be placed facing each other, a first adhesive surface is spread on the first outer-surface panel and a frame structure is formed on top of the first adhesive surface in order to support the outer-surface panels at a distance from each other, which frame structure conforms essentially to the outline of the outer-surface panels. In addition, in the method a suction arrangement is formed inside the frame structure in order to suck air from inside the element, at least one insulation layer is formed inside the frame structure by placing the insulation inside the frame structure on the first adhesive surface, the insulation being a material impervious to air, and a second adhesive surface is spread between the second outer-surface panel and the insulation layer. Further, in the method at least partly regularly-spaced separate spacer components are set against the inner surface of the frame structure, between the frame structure and the insulation, in order to make the adhesive space non-unified for the excess adhesive between the frame structure and the insulation, in which the non-unified adhesive space contains several chambers for the excess adhesive, separated from each other with the aid of spacer components. In the method, a vacuum is created inside the frame structure with the aid of a suction arrangement, in order to bring the first outer-surface panel into film contact with the first adhesive surface and to bring the second outer-surface panel into film contact with the second adhesive surface, and to suck air from the suction arrangement through the adhesive space in order to suck excess adhesive of the adhesive surface and the second adhesive surface into the non-unified adhesive space.

In this way, when sucking with the aid of a vacuum, the excess adhesive has a clear route to move, due to the effect of the sucking, in a controlled manner into the non-unified adhesive space, so that the stage of making separate adhesive grooves in the structures of the element is eliminated from the stages of the method. In the non-unified adhesive spaces, the air has a short suction journey through the spacer components from one chamber to the next, so that blockages do not occur and the adhesive accumulates in the chambers between the spacer components. The method described above accelerates the manufacture of elements by up to 20 %. In addition, using the method according to the invention an element can be implemented more reliably without the grooves according to the prior art in the insulation, which are liable to blockage. At the same time, the adhesive ending up in the adhesive space also stiffens the structure of the element, binding the frame structure and the insulation layers firmly to each other. Using the method according to the invention, the tolerance in dosing adhesive is much greater than in the prior art, in which too small an amount of adhesive causes defective gluing and too great an amount blockage in the suction arrangement. Now in the method according to the invention adhesive can be dosed generously and the adhesive collecting in the additional adhesive space provides, when it dries, additional stiffness to the element, without however, blocking the suction arrangement.

In this connection it should be understood that, although the suction arrangement is inside the frame structure, the suction arrangement preferably includes a suction connection to the frame structure for sucking air out from inside the element.

In this connection, the term non-unified refers to the fact that the adhesive space is divided with the aid of the spacer components into several chambers separate from each other, between which there is a connection to permit the movement of adhesive. This non-unified property is continuous in the direction of the sides of the frame structure.

In this connection the term at least partly at regular intervals of the spacer components refers to the fact that the spacer components can be spacers connected to each other, but there is always empty space between the individual spacer components, which forms chambers in the adhesive space. Alternatively, the spacer components can be completely separate pieces, detached from each other.

In this connection, the term separate spacer components preferably refers to components that are not integrated as part of the frame structure or the insulation, but are independent components, which are added in connection with the frame structure and insulation.

In the method, insulation with a non-grooved and even surface is preferably used, to increase the contact surface between the insulation and the outer-surface panel. This avoids the work stage related to making additional grooving and increases the contact surface with the insulation. The increased contact surface allows the formation of a stronger adhesive bond between the outer-surface panel and the insulation.

Preferably a frame structure with a smooth inner surface is also used in the method. The frame structure can then be implemented without separate groove-machining stages or similar.

According to one first embodiment, spacer components are used in the method, which have a depth of 80 - 98 %, preferably 92 - 96 %, between the outer-surface panels, of the corresponding depth of the frame structure, in order to permit the movement of air. Thus when using spacer components with a slightly lower depth than the frame structure, a sufficiently large surface area of the transverse surface area of the frame structure will remain free.

According to a second embodiment, spacer components are used in the method, which are equipped with transverse channels for sucking adhesive between the adhesive-space chambers. When transverse channels are used, a great deal of free surface area can be formed through the spacer components to facilitate the movement of adhesive. The free surface will then be more than when using spacer components that are slightly lower than the frame structure.

Preferably 2 - 15 %, most preferably 3 - 8 % of the transverse surface area of the suction arrangement remains free. There are then sufficiently large openings for the adhesive to move from one chamber to another and at the same time the spacer components are sufficiently large to offer a sufficiently great support between the insulation and the frame against vacuum.

In the method, 300 - 800 g/m², preferably 500 - 600 g/m² of adhesive can be used between the insulation layer and each outer-surface panel. The method according to the invention permits the use and exploitation of larger amounts of adhesive, as surplus adhesive is sucked into the adhesive space, where it forms in part a structure that stiffens the element when it hardens.

In the method, a stiffener structure, which strengthens the element, is preferably placed in each insulation layer inside the frame structure and the stiffener structure is filled with insulation. With the aid of the stiffener structure the total strength of the element is increased considerably, as the stiffener structure takes part of the external forces acting on the frame structure.

At least two insulation layers are preferably formed in the element. Insulation layers of standard thickness stacked on top of each other can thus be used.

Preferably the insulations layers are stacked on top of each other in a direction perpendicular to the plane of the outer-surface panels. This permits the use of insulation pieces of the greatest possible width.

The adhesive surface is preferably spread, after the first insulation layer, on the insulation layer following the previous insulation layer. Thus the insulation layers are also glued to each other.

In the method, a momentary vacuum of the magnitude of 0.5 - 0.95 bar, preferably 0.6 - 0.8 bar can be used to suck adhesive into the adhesive space. A sufficiently great vacuum will then be created to suck adhesive into the adhesive space of the suction arrangement between the outer-surface panel and the insulation. At the same time, the vacuum will be sufficient to pull the outer-surface panels firmly against the insulation and the frame structure, so that the plywood panel preferably acting as the outer-surface panel will be glued in place, creating a friction lock. The outer-surface panel should be chosen in such a way that it has sufficiently flexible properties to bend from the effect of the vacuum, in order to create a film contact against the insulation.

The intention of the element according to the invention can be achieved using an element, which includes two outer-surface panels arranged to be placed facing each other, an adhesive surface arranged on the surface of one outer-surface panel, and a frame structure for supporting the outer-surface panels at a distance from each other, the frame structure being arranged to essentially conform to the outline of the outer-surface panel when place on the adhesive surface. In addition, the element includes at least one insulation layer between the outer-surface panels, fitted inside the frame structure, in which each insulation layer includes insulation fitted inside a space delimited by the frame structure, which insulation is of a material impermeable to air. The element also includes a second adhesive surface arranged between the second outer-surface panel and the insulation layer for attaching the second outer-surface panel to the insulation layer, and a suction arrangement fitted between the frame structure and the insulation layer for sucking air from inside the element. The suction arrangement includes at least partly periodical separate spacer components for forming a non-unified adhesive space, in which the non-unified adhesive space contains chambers for surplus adhesive, separated from each other with the aid of the several spacer components.

In the element according to the invention, there is a built-in adhesive space, in which the excess adhesive of the adhesive surfaces can collect. The manufacture of the element with spacer components is considerably faster than using the grooves according to the prior art. In addition, the use of spacer components eliminates the need for grooves for the movement of the adhesive, so that the structure does not include parts that block easily. In this way, gluing succeeds more reliably and the result is an element of more even quality and better than elements according to the prior art. In addition, the adhesive collecting in the chambers of the adhesive space in the element acts, for its part, as a stiffener for the structure. In addition to forming an adhesive space, the spacers have the task of supporting the frame structure against the insulation, so that the air in the element can be sucked from inside the element without fear of the frame structure bending due to the effect of the vacuum. By the use of spacer components, the use of steel profiles can also be avoided, which are heavy and take up space from the insulation. Using the method according to the invention elements can be manufactured without an external frame structure, inside which the element is placed or with the aid of which the element is supported from outside.

According to one first embodiment, spacer components are used in the method, which have a depth of 80 - 98 %, preferably 92 - 96 %, between the outer-surface panels, of the corresponding depth of the frame structure, in order to permit the movement of air. Thus when using spacer components with a slightly lower depth than the frame structure, a sufficiently large surface area of the transverse surface area of the frame structure will remain free.

According to a second embodiment, spacer components are used in the method, which are equipped with transverse channels for sucking adhesive between the adhesive-space chambers. When transverse channels are used, a great deal of free surface area can be formed through the spacer components to facilitate the movement of adhesive. The free surface will then be more than when using spacer components that are slightly lower than the frame structure.

Preferably 2 - 15 %, most preferably 3 - 8 % of the transverse surface area of the suction arrangement remains free. There are then sufficiently large openings for the air to move from one chamber to another and at the same time the spacer components are sufficiently large to offer a sufficiently great support between the insulation and the frame against vacuum.

The stiffness of the outer-surface panel is preferably arranged to permit bending against the insulation due to the effect of the vacuum. This permits a film contact between the insulation and the outer-surface panel for gluing.

In the case of its outer surface, the insulation is preferably non-grooved and even. The greatest possible contact surface area is then obtained between the insulation and the outer-surface panel, to maximize the setting of the glued bond.

The width of a spacer component can be 30 - 200 %, preferably 70 - 120 % of the depth of the frame structure between the outer-surface panels. The suction journey of the adhesive through the spacer components will then then be quite short, when it will be possible to ensure the sufficiency of the vacuum used for suction to suck the adhesive through the space component without any problems.

The depth of the spacer component between the outer-surface panels can be 80 - 98 %, preferably 92 - 96 % of the depth of the frame structure.

The insulation layer preferably includes a stiffener structure for reinforcing the element, arranged on the adhesive surface inside the frame structure, inside which the insulation is fitted. The stiffener structure stiffens the element in such a way that the stiffness of the element against external loads is considerably greater than that of element according to the prior art.

The element preferably includes 2 - 6 insulation layers. Thus the insulation forming the insulation layer can be normal, commercially available, standard-dimension insulation pieces, several of which can be stacked on top of each other in order to achieve a sufficient thickness in the element.

According to one embodiment, the stiffener structure includes transverse or longitudinal reinforcements in the element, the direction of which reinforcements changes by 90° between the stacked insulation layers. Thus stiffness is achieved in two different direction with the aid of the stiffener structures.

According to one embodiment, the outer-surface panel is of sheet metal, with a thickness of 0.5 - 5.0 mm, preferably 2.0 - 3.0 mm.

If there are several insulation layers on top of each other in the element, the second adhesive surface is arranged, after the first insulation layer, on the insulation layer preceding the following insulation layer. The insulation layers are then also glued mutually to each other, thus improving the stiffness of the element.

The frame structure is preferably of wood or composite. These are light materials and thus well suited to elements.

The spacer components are preferably of wood, composite or plastic. These are light materials and thus well suited to elements.

The adhesive used for gluing can be, for example, a polyurethane adhesive, or some other similar adhesive suitable for the purpose. The adhesive is preferably a two-component polyurethane adhesive, which dries in 40 - 60 minutes at a temperature of 18 - 20 °C. The vacuum is maintained for long enough for the glued bond to achieve sufficient structural strength that the bond will hold even when normal pressure returns. The amount of hardener is adjusted to achieve the desired drying time.

There are preferably 2 - 4 suction connections in the element. It is therefore important that the spacer pieces pass air between the chambers.

In the following, the invention is described in detail with reference to the accompanying drawings showing some embodiment of the invention, in which
- Figure 1: shows the first stage in the manufacture of the element according to the invention, in which one outer-surface panel is formed,
- Figure 2: shows the second stage in the manufacture of the element according to the invention, in which a frame structure is formed on top of the adhesive surface spread on the outer-surface panel,
- Figure 3: shows the spacer components attached to the inner surface of the frame structure, seen from inside the frame structure,
- Figure 4a: shows the third stage in the manufacture of the element according to the invention, in which insulations are placed inside the frame structure, in order to form a first insulation layer,
- Figure 4b: shows the suction arrangement between the frame structure and the insulation in greater detail,
- Figures 5 and 6: show the fourth stage in the manufacture of the element according to the invention, in which a second and third insulation layer are placed on top of the first insulation layer,
- Figure 7: shows the fifth stage of the manufacture of the element according to the invention, in which the frame structure is closed to form the element with the aid of a second outer-surface panel and air is sucked through the suction arrangement,
- Figure 8: shows a cross-section of the finished element.

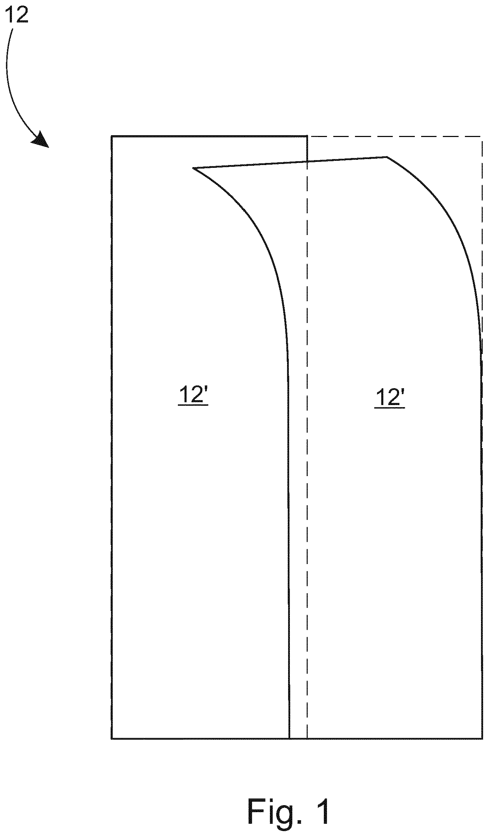

Figures 1 - 8 show the stages of the method according to the invention by showing one embodiment. It should be understood that the drawings show only one possible embodiment of the method and element and that, for example, the number of insulation layers and the dimensions of the element can vary between different embodiments of the element.

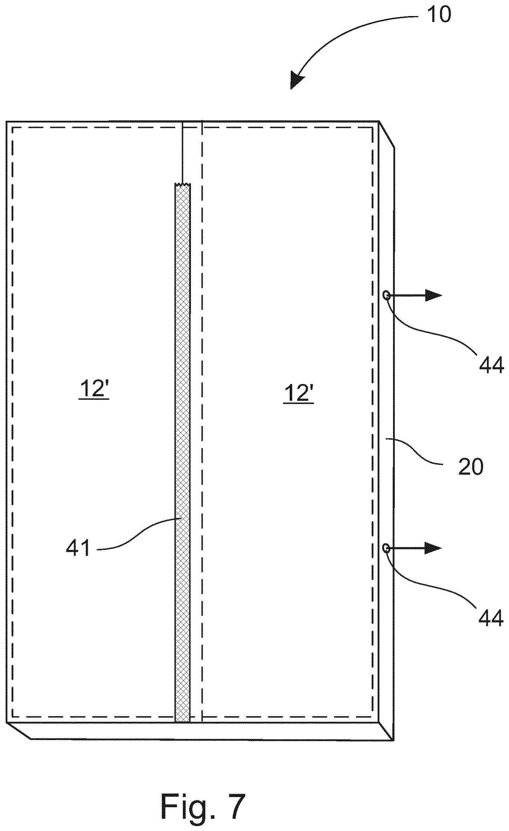

According to Figure 1, the outer-surface panels 12 are formed as the first stage. In this case, the individual outer-surface panel 12 shown in Figure 1 comprises two 1250-mm wide strips 12' of sheet-metal band. In this case, the width of the sheet-metal band is determined by the width of the ready coil of sheet-metal band. Here the two sheet-metal-band strips 12' are joined by gluing them with an overlap about 50-mm wide, so that the total width of the outer-surface panel 12 becomes 2400 mm. In addition to gluing, there is preferably also taping 41, shown in Figure 7, over the part of the sheet-metal bands that overlaps, the purpose of which is to seal the joint of the sheet-metal bands so as to make it airtight. At the same time, the tight joint prevents adhesive from escaping from inside the element. The material of the outer-surface panel is preferably galvanized sheet, but quite as well also composite, wood, or some other similar material can be used in the structure. The thickness of the sheet metal can be 0.5 - 5.0 mm, preferably 2.0 - 3.0 mm. Though Figure 1 shows only one outer-surface panel, it should be understood that at the same time two outer-surface panels are preferably made, of which one acts as the inner surface and the other as the outer surface of the element when it is finally installed.

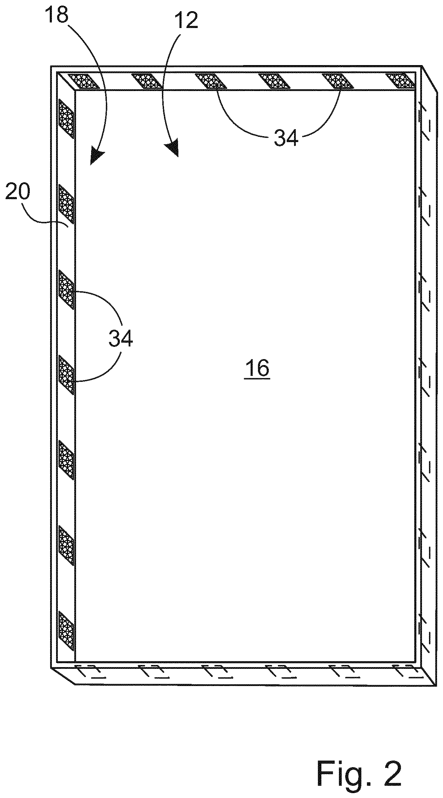

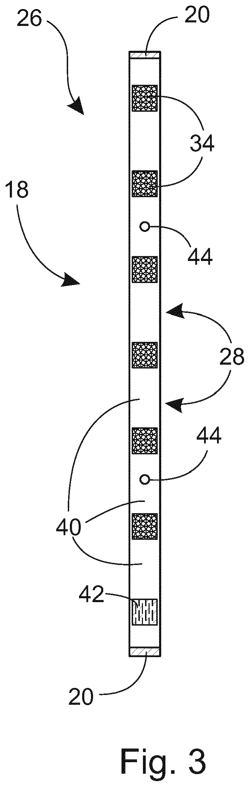

As the second stage, an adhesive surface 16 is spread on the outer-surface panel 12 and a frame structure 20 on top of this, according to Figure 2. The frame structure 20 is preferably a frame made from wood, in which the wood can be, for example, a panel 200-mm deep relative to the normal of the plane of the outer-surface panel and with a wall thickness of 50 mm. Alternatively, instead of wood, metal, composite, or some other material suitable for the purpose can be used as the material The frame structure 20 is a structure consisting of fours sides forming a perimeter, which perimeter conforms essentially to the perimeter of the outer-surface panel 12. The frame structure 20 is glued onto the outer-surface panel 12 with the aid of an adhesive surface 16. Suction connections 44 of the suction arrangement 18 shown in Figures 3 and 7 are preferably fitted to the frame structure 20, and through them the air remaining inside the element 10 can be sucked out.

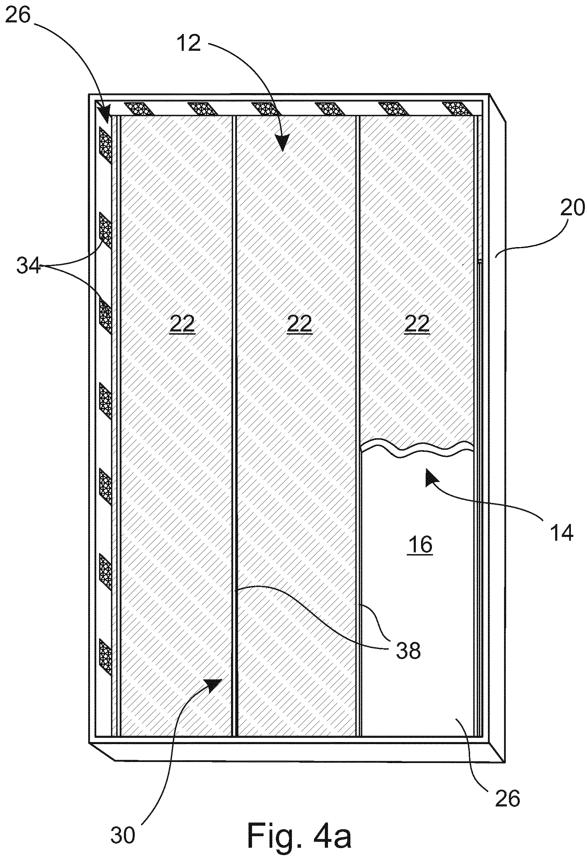

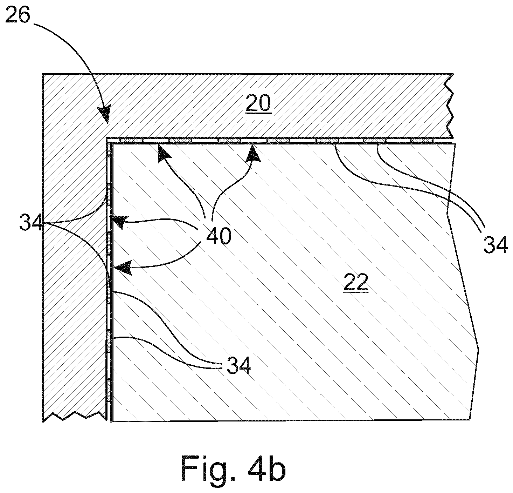

According to Figures 3 and 4 a suction arrangement 18 is formed on the inner surface of the frame structure 20. The suction arrangement 18 includes spacer components 26, the task of which is to form a non-unified adhesive space 28 between the frame structure 20 and the insulation 22 to be installed inside the frame structure 20 in the third stage in Figure 4. In addition to forming the adhesive space, the task of the spacer components 26 is to form a sturdy structure between the frame structure 20 and the insulation 22, so that when sucking into the frame structure 20 support is also obtained from the insulation 22. In practice, the adhesive space 28 is the non-unified space remaining between the spacer components 26.

The spacer components 26 can be, for example, spacers 34 according to Figures 3 and 4b, which are attached to the frame structure 20. The spacers 34 can have a thickness of, for example, 2 - 10mm, preferably 3 - 4 mm, between the frame structure 20 and the insulation 22. The spacers 34 are preferably attached at regular intervals to the frame structure 20, in such a way that between 200-mm wide spacers 34 there is correspondingly 200 mm of empty space, in which the adhesive space 28 is formed. The width of the spaces can be, for example, 100 - 250 mm, preferably 150 - 200 mm. The material used in the spaces can be, for example, plastic-coated corrugated board, a honeycomb structure, or a composite. According to one embodiment, the depth of the spacer components 26 between the outer-surface panels can be nearly the same as the depth of the frame structure 20, i.e. when the frame structure 20 is 200-mm deep, the spacer components can have a depth of, for example, 195 mm. A gap of at least 2.5 mm can then remain at both ends of the spacer component, through which air and adhesive can move.

According to a second embodiment, transverse channels 42 can be formed in the spacer components 26, the task of which is to allow air and adhesive to move between the chambers 40 of the non-unified adhesive space 28, according to Figure 3. In Figure 3, only one spacer component 26 is cut to show the transverse channels 42, but it should be understood that in this second embodiment all the spacer components 26 can contain transverse channels 42 to permit the access of air and partly also adhesive. In this connection, the term transverse channel 42 refers to channels parallel to the plane of the spacer components 26 in the transverse direction of the element 10. The diameter of the transverse channels 42 is 20 - 50 mm. Because the width of the spacer components 26 in the transverse direction of the element 10 can be 100 - 250 mm, preferably 150 - 200 mm, the length of the transverse channels 42 is also short and the vacuum needed to suck the adhesive through the spacer components can be easily achieved. The transverse channels can also be formed with the aid of an uneven surface in the spacer components, as can be seen from the spacer components 26 that are not cut in Figure 3.

In the third stage, shown in Figure 4a, the insulation 22 is set against the adhesive surface 16 on the inside of the frame structure 20. The insulation 22 can be a totality formed of one or several pieces of insulation, which fills the space delimited between the spacer components. The width of the insulation pieces can be, for example 60 cm. The insulation is of a material impermeable to air, such as, for example, polystyrene, urethane, or a similar hard material. The insulation can also be of rock wool, but its pressure resistance is considerably poorer than that of the aforementioned "hard" materials. The spacer components 26 encircle the inner surface of the frame structure 20 over the entire circumference of the frame structure 20. The insulation 22 preferably lies against the spaces 34 acting as spacer components 26. The insulation 22 is preferably non-grooved and with an even surface. In this connection, the term even refers to the fact that it is even according to the quality requirements of the manufacture of normal insulating panels.

According to Figure 4a, in addition to the insulation 22, a stiffener structure 30, the purpose of which is to stiffen the overall structure of the element, can be added in stage three. According to Figures 4 - 6, the stiffener structure 30 can be formed of, for example, reinforcements 38, which can be, for example, metal tubes or profiles. Instead of only tubes, it is more effective to use a frame made of tubular profiles as a stiffener. The reinforcements 38 can also preferably be attached to the frame structure 20, for example, with the aid of an angle iron or similar attachment mechanism, though the attachment is not shown in the figures. In one insulation layer 14 forming the insulation 22 there are preferably only reinforcements 38 in one direction, so that their installation is easy.

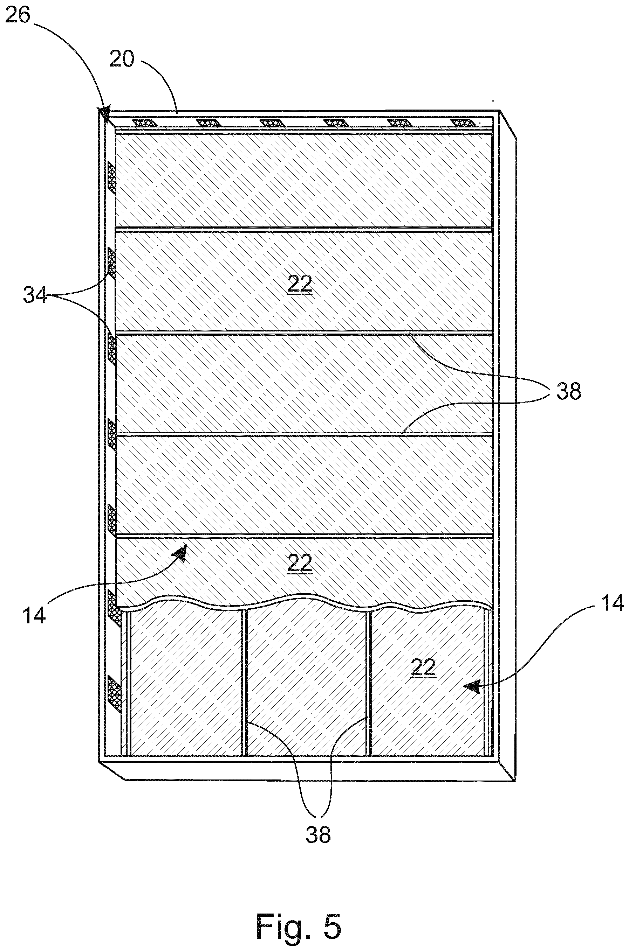

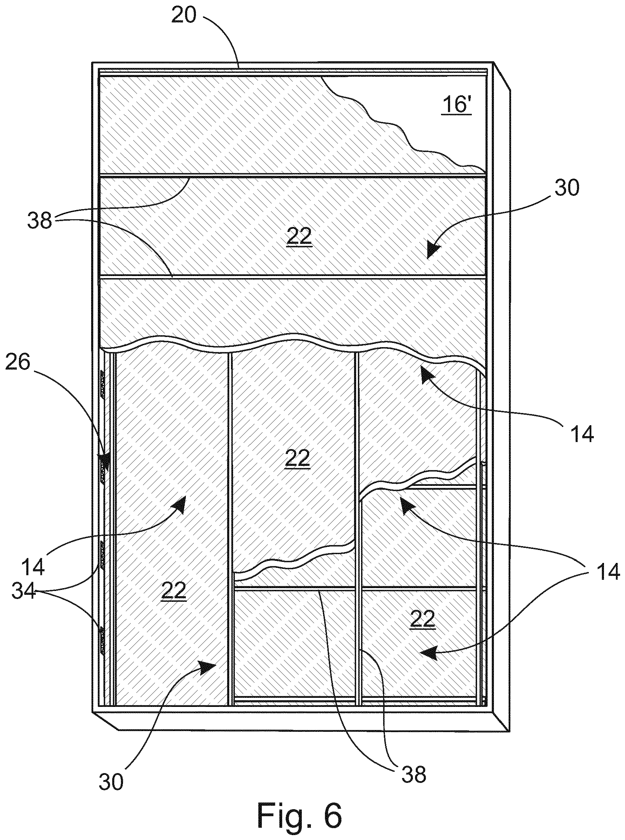

According to Figures 5 and 6, in the fourth stage preferably 2 - 6 insulation layers 14 can be added to the element, stacked on top of each other in a direction normal to the plane of the outer-surface panel, inside the frame structure 20. There are preferably four insulation layers, each of which is 50-mm deep. If a stiffener structure 30 is also used in addition to insulation 22 in the insulation layer 14, the stiffener structure 30 reinforcements 38 in the consecutive insulation layers 14 are preferably at a 90° angle relative to the preceding insulation layer 14. This can be seen from Figures 5 and 6. The outermost insulation layers are preferably only of insulation without a stiffener structure. The insulation layers are preferably glued to each other with the aid of an adhesive surface spread on the surface of each insulation layer 14.

According to Figure 7, in the fifth stage a second outer-surface panel 12, which closes the structure, is glued to the surface of the frame structure filled with insulation, with the aid of the second adhesive surface 16' shown in Figure 6. It should be noted that, although the second adhesive surface 16' is shown in Figure 6 over only a small area, the second adhesive surface 16' covers the entire surface of the uppermost insulation layer 30, to glue the second outer-surface panel.

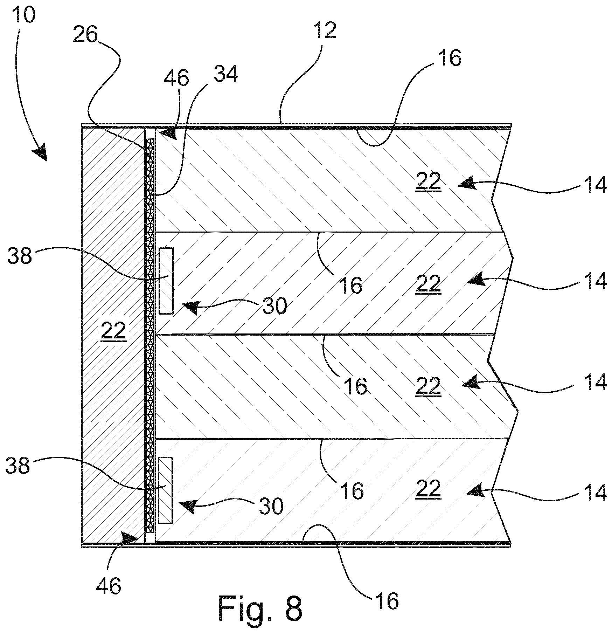

After this, the air inside the element 10 is sucked out through the suction arrangement 18, so that the outer-surface panels 12 are sucked tightly against the frame structure 14 and insulation 22, due to the vacuum created inside the element 10, thus forming a film contact with the adhesive surfaces. More precisely, a compressor which, for example, creates preferably a vacuum of 0.8 - 0.9 bar, i.e. an absolute pressure of about 0.2 bar, can be connected to the suction connection 44 of the suction arrangement 18. With the aid of the vacuum, the adhesive between the outer-surface panel 12 and the insulation 22 is sucked towards the adhesive space 28 formed with the aid of the spacer components 26 of the suction arrangement 18. The adhesive moves between the outer-surface panel and the insulation, at the same time spreading to form an even film contact. The excess adhesive ends up in the adhesive space, more precisely in the various chambers 40, which are separated from each other with the aid of the spacer components 26. Because there are suction connections 44 preferably only in some of the chambers, the spacer components 26 preferably cover only most of the transverse surface area of the suction arrangement, so that 2 - 15 %, preferably 3 - 8 % remains as free surface area. The free surface area is shown in Figure 8 with the reference number 46. The free surface area can be formed using transverse channels 42 or by using spacer components that are smaller than the depth of the frame structure. These permit the movement of air and partly also adhesive between the chambers 40 to that chamber 40, in which there is a suction connection 44. Alternatively, the spacer components are slightly lower in depth than the frame structure. At the same time, the excess adhesive of the various adhesive surfaces is sucked along with the air in the chambers of the adhesive space of the spacer components. Thanks to the adhesive spaces the excess adhesive does not end up in the suction connections 44 of the section arrangement 44, nor through them to the suction equipment, where it would rapidly block the air channels.

The adhesive sucked into the chambers of the adhesive space hardens in the chambers, where it forms in turn a structure reinforcing and stiffening the element.

The outer dimensions of the element according to the invention can be, for example, 4 m x 2.4 m x 0.2 m, where 4 m is the width of the element, 2.4 m its height, and 0.2 m its depth. The dimensions of the element can differ greatly from this, as the method according to the invention can be utilized in many different dimensions. The element according to the invention can be used without separate stiffeners as a non-load-bearing element, with which there is a separate load-bearing frame in the walls of the building. When using stiffeners inside the element, the element is suitable for use as a load-bearing wall or a floor structure, for example, in one-family houses, terraced houses, and other similar applications.

## Claims

1. Method for manufacturing an element, said method comprising the steps of:
- forming two outer-surface panels (12), i.e. a first outer-surface panel (12.1) and a second outer-surface panel (12.2), to be set facing each other,
- spreading a first adhesive surface (16.1) on the first outer-surface panel (12.1),
- forming a frame structure (20) on top of the first adhesive surface (16.1), in order to support the outer-surface panels (12) at a distance from each other, which frame structure (20) conforms essentially to the outline of the outer-surface panels (12),
- forming a suction arrangement (18) inside the frame structure (20), in order to suck air from inside the element (10),
- forming at least one insulation layer (14) inside the frame structure (20) by placing the insulation (22)inside the frame structure (20) on the first adhesive surface (16), the said insulation (22) being a material impervious to air,
- spreading a second adhesive surface (16.2) between the second outer-surface panel (12.2) and the insulation layer (14), and
- creating a vacuum with the aid of the suction arrangement (18) inside the frame structure (20) in order to bring the first outer-surface panel (12.1) into film contact with the first adhesive surface (16.1) and the second outer-surface panel (12.2) into film contact with the second adhesive surface (16.2)
**characterized in that** said method additionally comprises the steps of:
- placing at least partly periodical separate spacer components (26) against the inner surface (24) of the frame structure (20) between the said frame structure (20) and the insulation layer (14) as part of suction arrangement (18) for forming an adhesive space (28) as a non-unified space between the frame structure (20) and the insulation for excess adhesive, in which the non-unified adhesive space (28) contains several chambers (40) for the excess adhesive separated from each other with the aid of the spacer components (26), and
- sucking air from the suction arrangement (18) through the adhesive space (28) in order to suck the excess adhesive of the adhesive surface (16) and the second adhesive surface into the non-unified adhesive space (28) .

2. Method according to Claim 1, **characterized in that** non-grooved insulation (22) with an even surface is used to increase the contact surface between the insulation (22) and the outer-surface panels (12).

3. Method according to Claim 1 or 2, **characterized in that** spacer components (26) are used, which are 80 - 98 %, preferably 92 - 96 % of the corresponding depth of the frame structure (20) between the outer-surface panels (12), or which are equipped with transverse channels (42), for arranging 2 - 15 %, preferably 3 - 8 % of the transverse surface area of the suction arrangement (18) between the insulation (22) and the frame structure to be free.

4. Method according to any of Claims 1 - 3, **characterized in that** 300 - 800 g/m², preferably 500 - 600 g/m² of adhesive is used between the insulation (22) and each outer-surface panel (12).

5. Method according to any of Claims 1 - 4, **characterized in that** a stiffener structure (30) reinforcing the element (10) is placed inside each insulation layer (14) inside the frame structure (20) and the stiffener structure (30) is filled with the said insulation (22).

6. Method according to any of Claims 1 - 5, **characterized in that** at least two insulation layers (14) are formed in the element (10).

7. Method according to Claim 6, **characterized in that** the insulation layer (14) are assembled on top of each other in a direction perpendicular to the plane (32) of the outer-surface panels (12).

8. Method according to Claim 6 or 7, **characterized in that** an adhesive surface (16) is spread on the preceding insulation layer (14) of the following insulation layers (14) after the first insulation layer (14).

9. Element, which includes
- two outer-surface panels (12) to be set opposite to each other,
- an adhesive surface (16) arranged on the surface of one outer-surface panel (12),
- a frame structure (20) for supporting the outer-surface panels (12) at a distance from each other, the frame structure being arranged to essentially conform to the outline of the outer-surface panel (12) set on the adhesive surface (16),
- at least one insulation layer (14) fitted inside the frame structure (20) between the said outer-surface panels (12), in which each insulation layer includes insulation (22) fitted in the space delimited inside the frame structure (20), which said insulation (22) is of a material impervious to air,
- a second adhesive surface (16') arranged between the second outer-surface panel (12) and the insulation layer (14), for attaching the outer-surface panel (12) to the insulation layer (14), and
- a suction arrangement (18) fitted between the said frame structure (20) and the insulation layer (14), to suck air from inside the element (10),
**characterized in that** said suction arrangement (18) includes at least partly regularly-spaced separate spacer components (26) for forming a non-unified adhesive space (28) between the frame structure (20) and the insulation for excess adhesive, wherein the non-unified adhesive space (28) contains several chambers (40) for the excess adhesive separated from each other with the aid of several of the spacer components (26).

10. Element according to Claim 9, **characterized in that** the spacer components (26) have a depth between the outer-surface panels (12) of 80 - 98 %, preferably 92 - 96 % of the corresponding depth of the frame structure (20), or the spacer components (26) are equipped with transverse channels (42) for arranging the transverse surface area of the suction arrangement (18) between the insulation (22) and the frame structure (20) to be 2 - 15 %, preferably 3 - 8 % free.

11. Element according to Claim 9 or 10, **characterized in that** an outer surface belonging to the said insulation layer (14) is non-grooved and even.

12. Element according to any of Claims 9 - 11, **characterized in that** the said spacer components have a width of 100 - 250 mm, preferably 150 - 200 mm.

13. Element according to any of Claims 9 - 12, **characterized in that** the insulation layer (14) includes a stiffener structure (30) reinforcing the element (10), fitted inside the frame structure (20) on the adhesive surface (16), inside which the said insulation (22) is arranged.

14. Element according to any of Claims 9 - 13, **characterized in that** the element (10) includes 2 - 6 insulation layers (14) .

15. Element according to any of Claims 9 - 14, **characterized in that** the said frame structure (14) and the said spacer components are of wood or composite.

## Patentansprüche

1. Verfahren zur Herstellung eines Elements, wobei das Verfahren die folgenden Schritte umfasst:
- Formung von zwei Außenflächenplatten (12), d.h. einer ersten Außenflächenplatte (12.1) und einer zweiten Außenflächenplatte (12.2), die einander zugewandt angeordnet sind,
- Auftragen einer ersten Klebefläche (16.1) auf die erste Außenflächenplatte (12.1),
- Formung einer Rahmenkonstruktion (20) auf der Oberseite der ersten Klebefläche (16.1), um die Außenflächenplatten (12) im Abstand voneinander zu tragen, wobei die Rahmenkonstruktion (20) im Wesentlichen dem Umriss der Außenflächenplatten (12) entspricht,
- Bildung einer Absauganordnung (18) innerhalb der Rahmenkonstruktion (20), um Luft aus dem Inneren des Elements (10) abzusaugen,
- Formung mindestens einer Isolationsschicht (14) innerhalb der Rahmenkonstruktion (20) durch Anordnen der Isolierung (22) innerhalb der Rahmenkonstruktion (20) auf der ersten Klebefläche (16), wobei die besagte Isolierung (22) ein luftundurchlässiges Material ist,
- Auftragen einer zweiten Klebefläche (16.2) zwischen der zweiten Außenflächenplatte (12.2) und der Isolationsschicht (14), und
- Erzeugen eines Vakuums mit Hilfe der Absauganordnung (18) innerhalb der Rahmenkonstruktion (20), um die erste Außenflächenplatte (12.1) in einen Filmkontakt mit der ersten Klebefläche (16.1) und die zweite Außenflächenplatte (12.2) in einen Filmkontakt mit der zweiten Klebefläche (16.2) zu bringen,
**dadurch gekennzeichnet, dass** das besagte Verfahren zusätzlich folgende Schritten umfasst:
- Platzieren von zumindest teilweise regelmäßig getrennten Abstandshaltern (26) gegen die Innenfläche (24) der Rahmenkonstruktion (20) zwischen der besagten Rahmenkonstruktion (20) und der Isolationsschicht (14) als Teil einer Absauganordnung (18) zur Bildung eines Klebstoffraums (28) für überschüssigen Klebstoff als einen nicht einheitlichen Raum zwischen der Rahmenkonstruktion (20) und der Isolierung, wobei der nicht einheitliche Klebstoffraum (28) mehrere Kammern (40) für den überschüssigen Klebstoff enthält, die mit Hilfe der Abstandshalter (26) voneinander getrennt sind, und
- Absaugen von Luft aus der Absauganordnung (18) durch den Klebstoffraum (28), um den überschüssigen Klebstoff der Klebefläche (16) und der zweiten Klebefläche in den nicht einheitlichen Klebstoffraum (28) zu saugen.

2. Verfahren gemäß dem Patentanspruch 1, **dadurch gekennzeichnet, dass** eine nicht gerillte Isolierung (22) mit einer ebenen Oberfläche verwendet wird, um die Kontaktfläche zwischen der Isolierung (22) und den Außenflächenplatten (12) zu vergrößern.

3. Verfahren gemäß den Patentansprüchen 1 oder 2, **dadurch gekennzeichnet, dass** Abstandhalterkomponenten (26) verwendet werden, die 80 - 98 %, vorzugsweise 92 - 96 % der entsprechenden Tiefe der Rahmenkonstruktion (20) zwischen den Außenflächenplatten (12) aufweisen, oder die mit Querkanälen (42) ausgestattet sind, zur Anordnung von 2 - 15 %, vorzugsweise 3 - 8 % der Querschnittsfläche der Absauganordnung (18) zwischen der Isolierung (22) und der freizuhaltenden Rahmenkonstruktion.

4. Verfahren gemäß einem der Patentansprüche 1 - 3, **dadurch gekennzeichnet, dass** 300 - 800 g/m², vorzugsweise 500 - 600 g/m² Klebstoff zwischen der Isolierung (22) und jeder Außenflächenplatte (12) verwendet werden.

5. Verfahren gemäß einem der Patentansprüche 1 - 4, **dadurch gekennzeichnet, dass** eine das Element (10) verstärkende Versteifungsstruktur (30) in jeder Isolationsschicht (14) innerhalb der Rahmenstruktur (20) angeordnet wird und die Versteifungsstruktur (30) mit der besagten Isolierung (22) gefüllt wird.

6. Verfahren gemäß einem der Patentansprüche 1 - 5, **dadurch gekennzeichnet, dass** in dem Element (10) mindestens zwei Isolationsschichten (14) ausgeformt sind.

7. Verfahren gemäß dem Patentanspruch 6, **dadurch gekennzeichnet, dass** die Isolationsschichten (14) übereinander in einer Richtung senkrecht zur Ebene (32) der Außenflächenplatten (12) montiert werden.

8. Verfahren gemäß den Patentansprüchen 6 oder 7, **dadurch gekennzeichnet, dass** auf die vorhergehende Isolationsschicht (14) der folgenden Isolationsschichten (14) nach der ersten Isolationsschicht (14) eine Klebefläche (16) aufgebracht wird.

9. Ein Element, das umfasst
- zwei Außenflächenplatten (12), die einander gegenüberliegend angeordnet sind,
- eine Klebefläche (16), die auf der Oberfläche einer Außenflächenplatte (12) angeordnet ist,
- eine Rahmenkonstruktion (20) zum Tragen der Außenflächenplatten (12) im Abstand voneinander, wobei die Rahmenkonstruktion so angeordnet ist, dass sie im Wesentlichen dem Umriss der auf der Klebefläche (16) befindlichen Außenflächenplatten (12) entspricht,
- mindestens eine Isolationsschicht (14), die innerhalb der Rahmenkonstruktion (20) zwischen den Außenflächenplatten (12) angebracht ist, wobei jede Isolationsschicht eine Isolierung (22) beinhaltet, die in dem Raum angebracht ist, der innerhalb der Rahmenkonstruktion (20) begrenzt ist, wobei die besagte Isolierung (22) aus einem luftundurchlässigen Material besteht,
- eine zweite Klebefläche (16'), die zwischen der zweiten Außenflächenplatte (12) und der Isolationsschicht (14) angeordnet ist, zum Befestigen der Außenflächenplatte (12) an der Isolationsschicht (14), und
- eine Absauganordnung (18), die zwischen der Rahmenkonstruktion (20) und der Isolationsschicht (14) angebracht ist, um Luft aus dem Inneren des Elements (10) abzusaugen,
**dadurch gekennzeichnet, dass** die Absauganordnung (18) zumindest teilweise in regelmäßigem Abstand angeordnete separate Abstandshalter (26) zur Bildung eines nicht einheitlichen Klebstoffraums (28) zwischen der Rahmenkonstruktion (20) und der Isolierung für überschüssigen Klebstoff beinhaltet, wobei der nicht einheitliche Klebstoffraum (28) mehrere Kammern (40) für den überschüssigen Klebstoff enthält, die mit Hilfe mehrerer der Abstandshalter (26) voneinander getrennt sind.

10. Verfahren gemäß dem Patentansprüchen 9, **dadurch gekennzeichnet, dass** die Abstandshalter (26) eine Tiefe zwischen den Außenflächenplatten (26) von 80 - 98 %, vorzugsweise 92 - 96 % der entsprechenden Tiefe der Rahmenkonstruktion (20) aufweisen, oder die Abstandshalter (26) mit Querkanälen (42) ausgestattet sind, um die Querschnittsfläche der Absauganordnung (18) zwischen der Isolierung (22) und der Rahmenkonstruktion anzuordnen und 2 - 15 %, vorzugsweise 3 - 8 % freiliegend zu sein.

11. Element gemäß den Patentansprüchen 9 oder 10, **dadurch gekennzeichnet, dass** eine zu der besagten Isolationsschicht (14) gehörende Außenfläche nicht genutet und eben ist.

12. Element gemäß einem der Patentansprüche 9 - 11, **dadurch gekennzeichnet, dass** die besagten Abstandshalter eine Breite von 100 - 250 mm, vorzugsweise 150 - 200 mm aufweisen.

13. Element gemäß einem der Patentansprüche 9 - 12, **dadurch gekennzeichnet, dass** die Isolationsschicht (14) eine Versteifungsstruktur (30) aufweist, die das Element (10) verstärkt, das innerhalb der Rahmenstruktur (20) auf der Klebefläche (16) angebracht ist, in der die besagte Isolierung (22) angeordnet ist.

14. Element gemäß einem der Patentansprüche 9 - 13, **dadurch gekennzeichnet, dass** das Element (10) 2 - 6 Isolationsschichten (14) beinhaltet.

15. Element gemäß einem der Patentansprüche 9 - 14, **dadurch gekennzeichnet, dass** die besagte Rahmenkonstruktion (20) und die besagten Abstandshalter aus Holz oder Verbundstoff bestehen.

## Revendications

1. Méthode pour fabriquer un élément, ladite méthode comprenant les étapes suivantes :
- former deux panneaux de surface extérieure (12), c.-à.-d. un premier panneau de surface extérieure (12.1) et un second panneau de surface extérieure (12.2), à être placés l'un en face de l'autre,
- étaler une première surface adhésive (16.1) sur le premier panneau de surface extérieure (12.1),
- former une structure de cadre (20) sur la première surface adhésive (16.1), pour soutenir les panneaux de surface extérieure (12) à une certaine distance l'un de l'autre, laquelle structure de cadre (20) correspond essentiellement au contour des panneaux de surface extérieure (12),
- former un dispositif d'aspiration (18) à l'intérieur de la structure de cadre (20), pour aspirer de l'air de l'intérieur de l'élément (10),
- former au moins une couche d'isolation (14) à l'intérieur de la structure de cadre (20) en plaçant l'isolant (22) à l'intérieur de la structure de cadre (20) sur la première couche adhésive (16), ledit isolant (22) étant d'un matériau imperméable à l'air,
- étaler une seconde surface adhésive (16.2) entre le second panneau de surface extérieure (12.2) et la couche d'isolation (14), et
- créer un vide à l'aide du dispositif d'aspiration (18) à l'intérieur de la structure de cadre (20) pour faire venir le premier panneau de surface extérieure (12.1) en contact serré avec la première surface adhésive (16.1) et le second panneau de surface extérieure (12.2) en contact serré avec la seconde surface adhésive (16.2)
**caractérisée en ce que** ladite méthode comprend en outre les étapes suivantes :
- placer des composants d'écartement (26) séparés au moins partiellement périodiques contre la surface intérieure (24) de la structure de cadre (20) entre ladite structure de cadre (20) et la couche d'isolation (14) en tant que partie du dispositif d'aspiration (18) pour former un espace adhésif (28) en tant qu'un espace non-unifié entre la structure de cadre (20) et l'isolant pour un excédent d'adhésif, où l'espace adhésif non-unifié (28) comprend plusieurs chambres (40) pour l'excédent d'adhésif, séparées l'une de l'autre à l'aide desdits composants d'écartement (26), et
- aspirer de l'air du dispositif d'aspiration (18) à travers l'espace adhésif (28) dans le but d'aspirer l'excédent d'adhésif de la surface adhésive (16) et de la seconde surface adhésive vers l'espace adhésif non-unifié (28).

2. Méthode selon la revendication 1, **caractérisée en ce qu'**un isolant non rainuré (22) ayant une surface unie est utilisé pour augmenter la surface de contact entre l'isolant (22) et les panneaux de surface extérieure (12).

3. Méthode selon la revendication 1 ou 2, **caractérisée en ce que** des composants d'écartement (26) sont utilisés, qui sont de 80 à 98 %, de préférence de 92 à 96 % de la profondeur correspondante de la structure de cadre (20) entre les panneaux de surface extérieure (12), ou qui sont équipés de canaux transversaux (42), pour arranger que de 2 à 15 %, de préférence de 3 à 8 % de la surface transversale du dispositif d'aspiration (18) entre l'isolant (22) et la structure de cadre soit libre.

4. Méthode selon l'une quelconque des revendications 1 à 3, **caractérisée en ce que** de 300 à 800 g/m², de préférence de 500 à 600 g/m² d'adhésif est utilisé entre l'isolant (22) et chaque panneau de surface extérieure (12).

5. Méthode selon l'une quelconque des revendications 1 à 4, **caractérisée en ce qu'**une structure raidisseur (30) renforçant l'élément (10) est placée dans chaque couche d'isolation (14) à l'intérieur de la structure de cadre (20) et que la structure raidisseur (30) est remplie avec ledit isolant (22).

6. Méthode selon l'une quelconque des revendications 1 à 5, **caractérisée en ce qu'**au moins deux couches d'isolation (14) sont formées dans l'élément (10).

7. Méthode selon la revendication 6, **caractérisée en ce que** les couches d'isolation (14) sont assemblées les unes sur les autres dans une direction perpendiculaire au plan (32) des panneaux de surface extérieure (12).

8. Méthode selon la revendication 6 ou 7, **caractérisée en ce qu'**une surface adhésive (16) est étendue sur la couche d'isolation précédente (14) des couches d'isolation suivantes (14) après la première couche d'isolation (14).

9. Élément, qui comprend
- deux panneaux de surface extérieure (12) à être placés l'un à l'opposé de l'autre,
- une surface adhésive (16) disposée sur la surface d'un des panneaux de surface extérieure (12),
- une structure de cadre (20) pour soutenir les panneaux de surface extérieure (12) à une certaine distance l'un de l'autre, la structure de cadre étant disposée de sorte à correspondre essentiellement au contour du panneau de surface extérieure (12) placé sur la surface adhésive (16),
- au moins une couche d'isolation (14) agencée à l'intérieur de la structure de cadre (20) entre lesdits panneaux de surface extérieure (12), où chaque couche d'isolation comprend un isolant (22) agencé dans l'espace délimité à l'intérieur de la structure de cadre (20), lequel ledit isolant (22) est d'un matériau imperméable à l'air,
- une seconde surface adhésive (16') disposée entre le second panneau de surface extérieure (12) et la couche d'isolation (14), pour attacher le panneau de surface extérieure (12) à la couche d'isolation (14), et
- un dispositif d'aspiration (18) agencé entre ladite structure de cadre (20) et la couche d'isolation (14), pour aspirer de l'air de l'intérieur de l'élément (10),
**caractérisé en ce que** ledit dispositif d'aspiration (18) comprend des composants d'écartement (26) séparés au moins partiellement régulièrement espacés pour former un espace adhésif non-unifié (28) entre la structure de cadre (20) et l'isolant pour l'excédent d'adhésif, où l'espace adhésif non-unifié (28) comprend plusieurs chambres (40) pour l'excédent d'adhésif, séparées l'une de l'autre à l'aide de plusieurs composants d'écartement (26).

10. Élément selon la revendication 9, **caractérisé en ce que** la profondeur des composants d'écartement (26) entre les panneaux de surface extérieure (12) est de 80 à 98 %, de préférence de 92 à 96 % de la profondeur correspondante de la structure de cadre (20), ou bien les composants d'écartement (26) sont équipés de canaux transversaux (42), pour arranger que de 2 à 15 %, de préférence de 3 à 8 % de la surface transversale du dispositif d'aspiration (18) entre l'isolant (22) et la structure de cadre (20) soit libre.

11. Élément selon la revendication 9 ou 10, **caractérisé en ce qu'**une surface extérieure appartenant à ladite couche d'isolation (14) est non rainurée et unie.

12. Élément selon l'une quelconque des revendications 9 à 11, **caractérisé en ce que** lesdits composants d'écartement ont une largeur de 100 à 250 mm, de préférence de 150 à 200 mm.

13. Élément selon l'une quelconque des revendications 9 à 12, **caractérisé en ce que** la couche d'isolation (14) comprend une structure raidisseur (30) renforçant l'élément (10), agencé à l'intérieur de la structure de cadre (20) sur la surface adhésive (16), à l'intérieur de laquelle ladite couche d'isolation (22) est agencée.

14. Élément selon l'une quelconque des revendications 9 à 13, **caractérisé en ce que** l'élément (10) comprend de 2 à 6 couches d'isolation (14).

15. Élément selon l'une quelconque des revendications 9 à 14, **caractérisé en ce que** ladite structure de cadre (14) et lesdits composants d'écartement sont du bois ou du matériau composite.
